# DEMANDE DE BREVET EUROPEEN

(11) **EP 0 713 114 A1**
(43) Date de publication de la demande: **22.05.1996**
(21) Numéro de dépôt: 95402591.2
(22) Date de dépôt: 17.11.1995
(51) Int. Cl.: G02B 6/44

(54) **Câble à fibres optiques et procédé de fabrication d'un module de fibres optiques appartenant à un tel câble**

(30) Priorité: 21.11.1994 FR 9413901
(71) Demandeur: ALCATEL CABLE, F-92100 Clichy (FR)
(72) Inventeur: Gaillard, Pierre, F-95000 Cergy (FR)
(74) Mandataire: Pothet, Jean Rémy Emile Ludovic

(57) **Abrégé**

La présente invention concerne un câble à fibres optiques (1) comprenant au moins un module de fibres optiques (2) contenant une pluralité de fibres optiques (3) assemblées et maintenues entre elles par une résine souple (4) de manière à définir un ruban, ce ruban étant enroulé dans le câble de sorte que ses bords longitudinaux sont sensiblement accolés et qu'il a sensiblement la forme d'un cylindre,
caractérisé en ce que la résine souple (4) est appliquée de manière asymétrique par rapport au plan médian du ruban déroulé, auquel appartiennent tous les axes longitudinaux des fibres (3), et en ce que le ruban est enroulé en rapprochant ses bords longitudinaux de sorte que la majorité de la résine se trouve à l'intérieur du volume convexe délimité par la surface à laquelle appartiennent tous les axes longitudinaux des fibres dans le ruban enroulé.

## Description

La présente invention conceme un câble à fibres optiques, ainsi qu'un procédé de fabrication d'un module de fibres optiques appartenant à un tel câble.

Un câble à fibres optiques à modules de fibres optiques comprend en général un ou plusieurs assemblages de fibres optiques. Ces modules ont de préférence une géométrie cylindrique, et ce notamment pour des raisons d'encombrement et de facilité d'assemblage. Cependant, la géométrie cylindrique n'est pas la plus adaptée aux problèmes de connexion de ces modules avec un ou plusieurs ensembles de fibres optiques disposées en nappe au sein d'un ruban de fibres optiques.

Pour résoudre aussi bien les problèmes d'encombrement et de facilité d'assemblage que ceux de connexion mentionnés ci-dessus, on a proposé, dans le document FR-2 693 560, de réaliser un câble à fibres optiques comportant un jonc central autour duquel sont réparties les fibres optiques, l'ensemble étant entouré d'une gaine de maintien en un matériau synthétique, et tel que les fibres sont assemblées et maintenues entre elles par une résine souple, de manière à définir un ruban qui est enroulé autour du jonc de sorte que ses bords longitudinaux se touchent. Après dégainage de ce câble, on a directement à sa disposition un ruban de fibres optiques que l'on peut connecter de manière classique à un autre ruban.

Ce câble pose toutefois encore un certain nombre de problèmes.

En premier lieu, du fait que le ruban est enroulé, la résine de maintien des fibres optiques subit des contraintes en traction tendant à la détacher des fibres optiques. Ces dernières ne sont alors plus maintenues ni protégées dans le câble, de sorte qu'elles sont beaucoup plus sensibles à toutes les perturbations extérieures qui dégradent leurs performances de transmission.

D'autre part, ce câble nécessite l'emploi d'un jonc central permettant de maintenir le ruban enroulé sous forme sensiblement cylindrique. Un tel jonc rend la fabrication de ce câble complexe, et en accroît l'encombrement et le coût.

Le but de la présente invention est de remédier à ces problèmes en réalisant un câble à fibres optiques du type de celui décrit dans le document mentionné ci-dessus, dans lequel les risques de séparation de la résine et des fibres optiques sont largement réduits, et ne nécessitant pas en outre l'emploi d'un élément de renfort.

La présente invention propose à cet effet un câble à fibres optiques comprenant au moins un module de fibres optiques contenant une pluralité de fibres optiques assemblées et maintenues entre elles par une résine souple de manière à définir un ruban, ledit ruban étant enroulé dans ledit câble de sorte que ses bords longitudinaux sont sensiblement accolés et qu'il a sensiblement la forme d'un cylindre,
caractérisé en ce que ladite résine souple est appliquée de manière asymétrique par rapport au plan médian dudit ruban déroulé, auquel appartiennent tous les axes longitudinaux desdites fibres, et en ce que ledit ruban est enroulé en rapprochant ses bords longitudinaux de sorte que la majorité de ladite résine se trouve à l'intérieur du volume convexe délimité par la surface à laquelle appartiennent tous les axes longitudinaux des fibres dans le ruban enroulé.

Grâce à la disposition asymétrique de la résine par rapport au plan médian du ruban et au sens choisi pour l'enroulement, la résine ne subit que des contraintes en compression lorsque le ruban est enroulé, ce qui limite de manière significative les risques de séparation.

De plus, le sens de l'enroulement choisi entraîne une concentration de la résine à l'intérieur de l'enroulement, ce qui assure une meilleure résistance à l'écrasement du module ainsi formé

La disposition asymétrique et le sens choisi pour l'enroulement facilitent en outre l'enroulement du ruban et son maintien sous forme cylindrique, puisque les forces de réaction de la résine à l'enroulement sont moins importantes que si la résine était disposée de manière symétrique. De plus, la résine qui se trouve à l'intérieur de l'enroulement sert en partie de renfort mécanique, ce qui permet d'éviter l'emploi d'un élément de renfort additionnel.

De manière avantageuse, le ruban peut être enroulé sur lui-même en hélice. Ceci permet d'une part de mieux maintenir le ruban sous forme cylindrique par rapport à la solution de l'art antérieur selon laquelle le ruban est enroulé en long autour d'un élément de renfort, et d'autre part d'améliorer la tenue du ruban enroulé aux efforts de flexion subis par le câble.

De plus, l'amélioration du maintien sous forme cylindrique rend inutile l'utilisation d'une gaine en un matériau synthétique disposée autour du ruban enroulé, ainsi que préconisé dans l'art antérieur, ce qui réduit encore l'encombrement du câble selon l'invention ainsi que les difficultés de fabrication.

Selon une caractéristique additionnelle, la résine a un module d'élasticité inférieur à 12000 psi, ce qui lui permet d'avoir la souplesse suffisante pour subir l'enroulement nécessaire sans se détériorer, et un coefficient d'expansion thermique voisin de celui des fibres optiques, pour ne pas entraîner, sous l'effet de variations de température, de contraintes trop importantes sur les fibres optiques risquant de dégrader leurs propriétés optiques.

La présente invention a également pour objet un procédé de fabrication d'un module de fibres optiques d'un câble selon l'invention, caractérisé en ce qu'il comprend les opérations suivantes :
- application de ladite résine souple à l'ensemble desdites fibres disposées parallèlement les unes aux autres de sorte que leurs axes longitudinaux appartiennent sensiblement à un même plan, ladite application étant effectuée de manière asymétrique par rapport audit plan,
- réticulation partielle de ladite résine, pour obtenir ledit ruban,
- enroulement dudit ruban en rapprochant ses bords longitudinaux, de manière à lui donner une forme sensiblement cylindrique
- réticulation complète de ladite résine pour maintenir la forme cylindrique dudit enroulement.

Le fait de séparer en deux étapes la réticulation de la résine permet de faciliter l'opération d'enroulement, la résine n'étant pas encore tout à fait durcie pendant cette opération et donc plus souple et facile à enrouler, et de faciliter le maintien du ruban enroulé sous une forme bien cylindrique dans le câble, en terminant le durcissement après l'enroulement.

D'autres caractéristiques et avantages de la présente invention apparaîtront dans la description suivante d'un câble selon l'invention et d'un procédé de fabrication associé, donnée à titre illustratif et nullement limitatif.

Dans les figures suivantes :
- la figure 1 montre en coupe transversale un câble selon l'invention,
- la figure 2A montre une vue agrandie et en perspective d'un module de fibres optiques du câble de la figure 1 à l'état déroulé,
- la figure 2B montre une vue agrandie et en perspective d'un module de fibres optiques du câble de la figure 1 à l'état enroulé,
- la figure 3 illustre très schématiquement un dispositif permettant de fabriquer un module de fibres optiques du câble de la figure 1,
- la figure 4 est une vue de côté dans la direction IV de la figure 3.

Dans toutes ces figures, les éléments communs portent les mêmes numéros de référence.

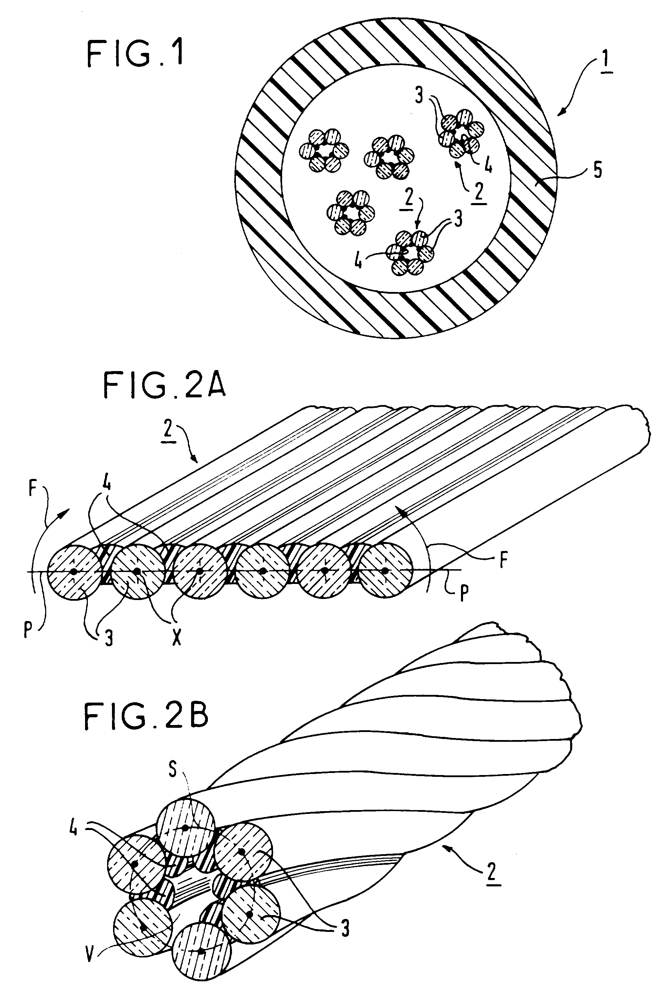

On voit en figure 1 un câble 1 selon l'invention, qui comporte une pluralité de modules de fibres optiques 2 (cinq modules 2 ont été représentés en figure 1). Selon l'invention, chaque module de fibres optiques 2 se compose de plusieurs fibres optiques 3 (six dans l'exemple représenté) assemblées et maintenues entre elles au moyen d'une résine souple (par exemple de module d'élasticité inférieur à 12000 psi) 4, ayant de préférence un coefficient de dilatation thermique voisin de celui des fibres optiques 3. Les modules de fibres optiques 2 sont disposés de manière libre à l'intérieur d'une enveloppe de protection 5 du câble 1, en un matériau isolant.

La figure 2A montre un module 2 à l'état déroulé. Dans cet état, le module 2 a la forme d'un ruban de fibres optiques, qui porte également la référence 2. Selon l'invention, afin de faciliter l'enroulement du ruban 2 en rendant inutile l'emploi d'un élément de renfort, et afin d'éviter toute séparation de la résine 4 des fibres optiques 3 une fois le ruban 2 enroulé, la résine 4 est appliquée sur les fibres 3 de manière asymétrique par rapport au plan médian P du ruban 2.

Plus précisément, dans le module 2 déroulé, toutes les fibres optiques 3 sont disposées parallèlement les unes aux autres, avec leurs axes longitudinaux X appartenant tous sensiblement à un même plan référencé P sur la figure 2A.

Du fait de la disposition asymétrique de la résine 4 par rapport au plan P, il est aisé d'enrouler le ruban 2 de manière à rapprocher ses bords latéraux dans le sens des flèches F, de sorte que la majorité, et de préférence la quasi-totalité de la résine 4 se trouve "à l'intérieur" de l'enroulement, c'est-à-dire dans le volume convexe V délimité par la surface S (voir figure 2B) à laquelle appartiennent tous les axes longitudinaux X des fibres 3 dans le ruban 2 enroulé. On obtient ainsi un module 2 de forme sensiblement cylindrique (voir figure 2B), dans lequel la résine 4 subit uniquement des contraintes en compression, de sorte que le risque qu'elle se détache des fibres optiques 3 est très limité.

La figure 2B montre le module 2 à l'état enroulé. Selon l'invention, le module 2 peut être enroulé en long, c'est-à-dire de sorte que ses fibres optiques 3 restent parallèles entre elles et à un axe central commun.

Toujours selon l'invention, le module 2 peut également être enroulé sur lui-même en hélice, ainsi que représenté en figure 2B. Ceci a pour avantage de conférer au module 2 une plus grande souplesse et une meilleure tenue en flexion. De plus, un tel enroulement conserve mieux sa forme cylindrique qu'un enroulement en long, de sorte qu'il rend inutile l'utilisation d'une gaine de maintien disposée directement autour du module 2 et en contact avec ce dernier, ainsi que préconisé dans l'art antérieur.

Pour réaliser un module 2 d'un câble selon l'invention, on peut simplement réaliser le ruban le constituant, c'est-à-dire appliquer la résine 4 sur les fibres optiques 3 maintenues parallèles les unes aux autres et sensiblement dans un même plan, puis réticuler cette résine et enfin enrouler le ruban pour obtenir le module 2 à l'état enroulé. De manière alternative, on peut effectuer la réticulation seulement après l'opération d'enroulement.

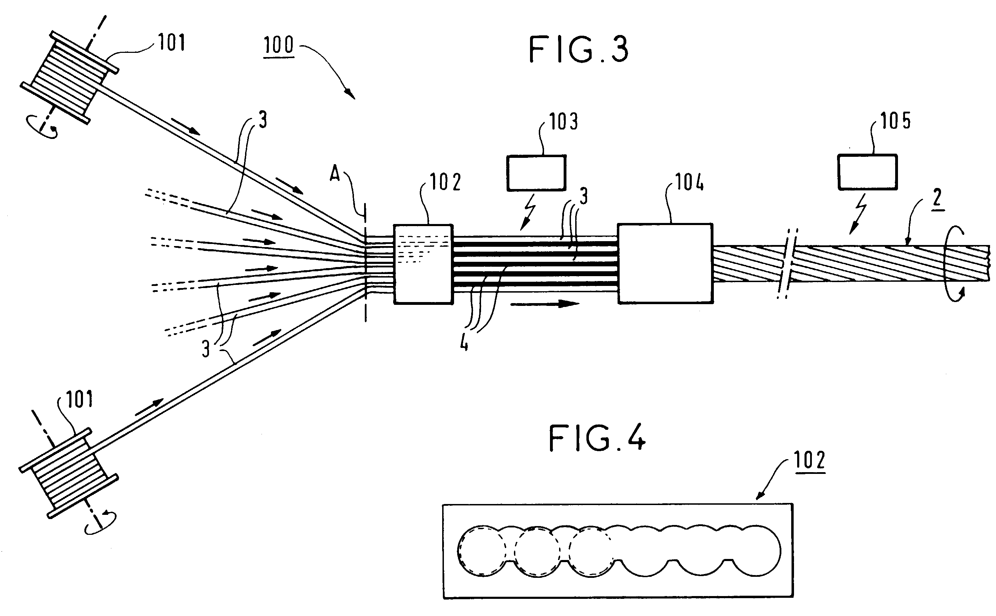

On a représenté très schématiquement en figure 3 un dispositif 100 permettant de fabriquer, selon une autre variante de l'invention, un module 2 tel que celui de la figure 2B.

Le dispositif 100 comporte une pluralité de bobines 101 (seules deux d'entre elles ont été représentées en figure 3 pour des raisons de clarté) pour stocker et dévider les fibres optiques 3 indépendamment les unes des autres. Les fibres 3 sont amenées parallèlement les unes aux autres et sensiblement dans un même plan P au niveau d'une section A du dispositif 100. Elles traversent ensuite ainsi une filière d'enduction 102 permettant de leur appliquer la résine 4 non réticulée. Afin d'appliquer la résine 4 non réticulée de manière asymétrique par rapport au plan P, on peut utiliser une filière 102 ayant une section transversale (voir figure 4) complémentaire de celle que doit occuper la résine 4.

L'ensemble de fibres 3 ainsi revêtu est ensuite exposé à un rayonnement ultraviolet assurant une réticulation partielle de la résine 4, au moyen d'un four de réticulation 103, de sorte que la résine 4 conserve une certaine souplesse tout en assurant déjà un maintien des fibres optiques 3.

Le ruban ainsi formé traverse alors un dispositif 104 permettant de l'enrouler sur lui-même en hélice, de manière à obtenir une forme sensiblement cylindrique, puis défile en regard d'un second four 105, identique au four 103, assurant la réticulation complète de la résine 4, toujours au moyen d'un rayonnement ultraviolet, pour réaliser le maintien de la forme cylindrique du module 2.

Le fait d'effectuer la réticulation en deux étapes, avant et après l'enroulement, facilite l'opération d'enroulement et améliore la tenue du module 2 à l'état enroulé.

Le module 2 ainsi préparé peut ensuite être utilisé dans tout type de câble optique.

Bien entendu, la présente invention n'est pas limitée au mode de réalisation qui vient d'être décrit.

Notamment, un câble optique selon l'invention peut avoir une structure quelconque, éventuellement différente de la structure libre représentée en figure 1. Par exemple, plusieurs modules 2 peuvent être assemblés autour d'un élément porteur central au lieu d'être laissés libres dans une enveloppe de protection.

L'enveloppe de protection extérieure du câble peut être simple, comme représenté en figure 1, ou plus complexe, incluant différents éléments de renfort et/ou d'étanchéité, toutes ces dispositions étant largement connues de l'homme du métier.

L'enroulement en hélice du ruban 2 peut être effectué autour d'un outillage de maintien qui est éliminé une fois l'enroulement terminé. Il peut être obtenu par exemple au moyen d'une bobine de réception tournante.

D'autre part, la résine utilisée peut être de tout type connu, du moment qu'elle présente une relative souplesse.

Le dispositif de fabrication représenté peut être installé verticalement ou horizontalement.

Enfin, on pourra remplacer tout moyen par un moyen équivalent sans sortir du cadre de la présente invention.

## Revendications

1. Câble à fibres optiques (1) comprenant au moins un module de fibres optiques (2) contenant une pluralité de fibres optiques (3) assemblées et maintenues entre elles par une résine souple (4) de manière à définir un ruban, ledit ruban étant enroulé dans ledit câble de sorte que ses bords longitudinaux sont sensiblement accolés et qu'il a sensiblement la forme d'un cylindre,
caractérisé en ce que ladite résine souple (4) est appliquée de manière asymétrique par rapport au plan médian dudit ruban déroulé, auquel appartiennent tous les axes longitudinaux desdites fibres (3), et en ce que ledit ruban est enroulé en rapprochant ses bords longitudinaux de sorte que la majorité de ladite résine se trouve à l'intérieur du volume convexe délimité par la surface à laquelle appartiennent tous les axes longitudinaux des fibres dans le ruban enroulé.

2. Câble selon la revendication 1 caractérisé en ce que ledit ruban est enroulé sur lui-même en hélice.

3. Câble selon l'une des revendications 1 ou 2 caractérisé en ce que ladite résine a un module d'élasticité inférieur à 12000 psi et un coefficient d'expansion thermique voisin de celui desdites fibres optiques.

4. Procédé de fabrication d'un module de fibres optiques d'un câble selon l'une des revendications 1 à 3 caractérisé en ce qu'il comprend les opérations suivantes :
- application de ladite résine souple (4) à l'ensemble desdites fibres (3) disposées parallèlement les unes aux autres de sorte que leurs axes longitudinaux appartiennent sensiblement à un même plan, ladite application étant effectuée de manière asymétrique par rapport audit plan,
- réticulation partielle de ladite résine, pour obtenir ledit ruban,
- enroulement dudit ruban en rapprochant ses bords longitudinaux, de manière à lui donner une forme sensiblement cylindrique
- réticulation complète de ladite résine pour maintenir la forme cylindrique dudit enroulement.
